Europäisches Patentamt

European Patent Office

Office européen des brevets

(11) Numéro de publication : **0 399 876 B1**

# FASCICULE DE BREVET EUROPEEN

(45) Date de publication du fascicule du brevet :
**15.11.95 Bulletin 95/46**

(51) Int. Cl.⁶ : **G01N 22/04,** G01F 1/74,
**G01F 1/66**

(21) Numéro de dépôt : **90401307.5**

(22) Date de dépôt : **16.05.90**

(54) **Procédé et dispositif pour mesurer des qualités d'un fluide polyphasique.**

(30) Priorité : **23.05.89 FR 8906835**

(43) Date de publication de la demande :
**28.11.90 Bulletin 90/48**

(45) Mention de la délivrance du brevet :
**15.11.95 Bulletin 95/46**

(84) Etats contractants désignés :
**DE FR GB**

(56) Documents cités :
**DE-A- 2 715 876
DE-A- 3 627 966
FR-A- 2 511 769
US-A- 4 727 311
US-A- 4 812 739
PATENT ABSTRACTS OF JAPAN vol. 6, no. 13
(P-99)(891) 26 janvier 1982 ; & JP-A-56 138 216**

(73) Titulaire : **INSTITUT FRANCAIS DU PETROLE
4, Avenue de Bois Préau
F-92502 Rueil-Malmaison (FR)**

(72) Inventeur : **Castel, Yvon
35, rue des Cerisiers
F-78290 Croissy sur seine (FR)**
Inventeur : **Lynch, John
29,avenue du Mont Valérien
F-92500 Reuil Malmaison (FR)**
Inventeur : **Burzynski, Jean-Pierre
40, rue du Commandant Charcot
F-69000 Lyon (FR)**

EP 0 399 876 B1

# Description

L'invention concerne un dispositif et un procédé pour mesurer des qualités d'un fluide polyphasique comportant au moins deux liquides qui constituent au moins deux phases distinctes au moyen de micro-ondes notamment, ces qualités pouvant être les quantités des deux liquides, leur vitesse, leur débit et aussi, la quantité ou la vitesse d'un gaz contenu dans le fluide.

L'invention s'applique, en particulier, à la production d'hydrocarbures comprenant un mélange polyphasique gaz-liquide(s), cette production pouvant notamment, mais non exclusivement, être réalisée dans un environnement d'accès difficile, par exemple au niveau d'une tête de puits ou d'une ligne de transfert sous-marines, ou encore dans la forêt vierge.

L'invention s'applique aussi à l'industrie chimique et pétrolière, ou d'une manière générale à toutes les industries employant des fluides comportant au moins deux liquides.

En production pétrolière notamment, on cherche généralement à connaître les quantités ou les débits des trois constituants eau, hydrocarbures liquides et gaz qui constituent trois phases distinctes dont les qualités sont difficiles à analyser en continu.

Il est connu d'utiliser le bombardement neutronique, le rayonnement gamma (dichromique), les micro-ondes, la résonance magnétique nucléaire pour mesurer la concentration d'un seul liquide d'un fluide comportant plusieurs liquides. Les techniques classiques de mesure utilisant les micro-ondes ne peuvent de plus déterminer que la concentration d'un liquide ayant une forte absorption par rapport à un autre liquide auquel il est mélangé.

Le document US-4.812.739 décrit un procédé et un dispositif permettant d'obtenir la quantité d'une phase contenue dans un mélange par un calcul combinant les mesures d'atténuation obtenues pour trois valeurs de fréquences, l'une de ces valeurs étant calée sur la fréquence d'absorption de la phase à déterminer, les deux autres étant situées de part et d'autre de cette fréquence et décalées d'une faible valeur par rapport à cette fréquence centrale.

Le procédé et le dispositif selon l'invention permettent de mesurer les quantités absolues et relatives d'au moins deux liquides contenus dans un fluide.

Pour réaliser les mesures, on utilise au moins une caractéristique intrinsèque des fluides relative aux micro-ondes. Cette caractéristique qui peut être l'absorption, la réflexion, la diffusion, la diffraction, la polarisation, le déphasage de micro-ondes, est définie par un facteur. Ce facteur dépend des caractéristiques du faisceau de micro-ondes, par exemple la ou les fréquences de ce faisceau, et du fluide ou plus généralement du corps traversé. D'une manière avantageuse, la caractéristique mesurée est l'absorption et le facteur est par exemple : le facteur d'absorption aux micro-ondes qui est appelé le facteur de perte aux micro-ondes ou encore le facteur de perte. La mesure de ce facteur peut être effectuée par transmission ou encore par transmission et réflexion.

Par micro-ondes, on entend les ondes dont la fréquence est comprise entre 0,1 et 1000 GHz, mais d'une manière avantageuse pour la mise en oeuvre du procédé ou pour la réalisation du dispositif selon l'invention, la fréquence des micro-ondes utilisée est comprise entre 1 et 100 GHz ou encore entre 10 et 100 GHz.

L'invention propose un procédé pour mesurer des qualités d'un fluide polyphasique constitué d'au moins un premier liquide et d'au moins un second liquide constitué d'une phase différente de celle du premier liquide, chaque liquide ayant au moins un facteur d'une caractéristique intrinsèque aux micro-ondes pour une fréquence donnée. Il est caractérisé en ce qu'on émet un premier faisceau de micro-ondes à une première fréquence fixe f1 à travers ledit fluide, ladite fréquence étant une fréquence pour laquelle la valeur de la caractéristique intrinsèque du premier liquide est grande par rapport à la valeur de la caractéristique intrinsèque du second liquide, on détermine la valeur de ladite caractéristique intrinsèque que possède le premier faisceau de micro-ondes après avoir traversé ledit fluide, on émet un second faisceau de micro-ondes à une seconde fréquence fixe f2 à travers ledit fluide, ladite seconde fréquence étant une fréquence pour laquelle la valeur de la caractéristique intrinsèque du second liquide est non négligeable devant la valeur de la caractéristique intrinsèque du premier liquide, on détermine la valeur de la caractéristique intrinsèque que possède le second faisceau de micro-ondes après avoir traversé ledit fluide, on détermine la quantité du premier liquide et la quantité du second liquide à partir de la valeur de ladite caractéristique intrinsèque du premier faisceau et la valeur de ladite caractéristique intrinsèque du second faisceau, lesdites quantités permettant de déterminer les qualités dudit fluide.

Le facteur de la caractéristique intrinsèque pourra être le facteur de perte aux micro-ondes, et la caractéristique intrinsèque sera l'absorption aux micro-ondes.

Ledit fluide pourra comporter du gaz.

Lorsque le premier liquide comporte une composante aqueuse, la première fréquence pourra être sensiblement égale à 21 GHz et la deuxième fréquence possédera une valeur éloignée de 21 GHz. Par fréquence éloignée, on entend la fréquence à partir de laquelle l'appareil mesurant la caractéristique du flux de micro-ondes est capable de détecter une quantité déterminée du premier liquide.

Le fluide pourra comporter un composé hydrocarboné.

Dans le cas où le fluide est en mouvement suivant un sens,

- on pourra mesurer la variation de fréquence d'un faisceau de micro-ondes ayant une fréquence initiale, et traversant ledit fluide dans un sens non perpendiculaire au sens du mouvement, ladite fréquence initiale étant une fréquence pour laquelle le facteur de la caractéristique intrinsèque du premier ou deuxième liquide est négligeable devant le facteur de la caractéristique intrinsèque respectivement du deuxième ou du premier liquide, et
- on pourra déterminer la vitesse du liquide dont le facteur de la caractéristique intrinsèque est prépondérant.

Lorsque le fluide est en mouvement :

- on peut déterminer, l'évolution dans le temps, de l'amplitude d'un faisceau de micro-ondes ayant au moins une fréquence initiale, et traversant ledit fluide dans un sens non perpendiculaire au sens du mouvement, ladite fréquence initiale étant une fréquence pour laquelle les facteurs de la caractéristique intrinsèque du premier et du deuxième fluide sont du même ordre de grandeur, puis
- on pourra analyser en fréquence l'évolution de ladite amplitude de manière à établir au moins une variation de fréquence, et
- on pourra déterminer, à partir de la ou des variations de la fréquence initiale et de la composition dudit fluide, la vitesse de chacun des liquides dudit fluide.

Lorsque le fluide comporte du gaz ayant un mouvement, ledit gaz comportant des particules auquel est associé un facteur d'une caractéristique intrinsèque relative aux micro-ondes,

- on pourra séparer au moins une partie du gaz et des premier et second liquides,
- on pourra mesurer la variation de fréquence d'un flux de micro-ondes ayant une fréquence initiale et traversant ladite partie de gaz suivant un sens non perpendiculaire du mouvement, et
- on pourra déterminer à partir de la variation de fréquence la vitesse dudit gaz.

Le procédé selon l'invention trouve son application pour détecter et/ou mesurer la caractéristique d'un faisceau de micro-ondes ayant traversé au moins une partie des faces parallèles d'un volume dans lequel on envoie le fluide polyphasique.

L'invention propose aussi un dispositif pour mesurer des qualités d'un fluide polyphasique composé d'au moins un premier liquide et d'un second liquide constitué d'une phase différente de celle du premier liquide, ledit fluide étant en écoulement dans le dispositif.

Ce dispositif est notamment caractérisé en ce qu'il comporte un volume, retenant le fluide, ayant deux fenêtres parallèles et transparentes aux micro-ondes et une section de passage du fluide en écoulement connue, et en ce qu'il comporte des premiers moyens émetteurs de micro-ondes à une première fréquence f1 traversant l'une desdites fenêtres pour laquelle la valeur de la caractéristique intrinsèque du second liquide est négligeable par rapport à la valeur de la caractéristique intrinsèque du premier liquide, des seconds moyens récepteurs des micro-ondes émis par les premiers moyens et ayant traversé le volume de fluide, des troisième moyens permettant de déterminer la valeur de la caractéristique intrinsèque de l'énergie micro-onde reçue par lesdits seconds moyens, des quatrième moyens émetteurs de micro-ondes à une seconde fréquence à travers le volume du fluide, la seconde fréquence étant une fréquence pour laquelle la valeur de la caractéristique intrinsèque du second liquide n'est pas négligeable devant la valeur de la caractéristique intrinsèque du premier liquide, des cinquième moyens récepteurs de faisceaux de micro-ondes provenant des quatrième moyens et ayant traversé le volume de fluide, des sixième moyens pour déterminer la valeur de la caractéristique intrinsèque des micro-ondes reçus par les cinquième moyens, des septième moyens permettant de déterminer à partir de la caractéristique intrinsèque reçue par les second moyens la quantité du premier liquide contenue dans le fluide polyphasique, des huitième moyens permettant de déterminer à partir de la caractéristique intrinsèque reçue par lesdits sixième moyens, la quantité de l'ensemble du premier et du second liquide contenus dans le fluide et des neuvième moyens pour déterminer à partir de la quantité du premier liquide et de la quantité de l'ensemble du premier et du second liquide, la quantité du second liquide contenu dans le volume de fluide, lesdites quantités permettant de déterminer les qualités du fluide.

Ces fenêtres pourront être disposées de part et d'autres du volume, de manière que le volume soit traversé de part en part, par exemple dans les mesures en transmission directe.

Ces fenêtres pourront être disposées d'un même côté du volume, par exemple lorsque l'on voudra réaliser des mesures par réflexion ou transmission-réflexion.

Les fenêtres pourront être réalisées en un matériau composite transparent aux micro-ondes.

Lorsque le fluide est en écoulement, le volume du dispositif pourra être un tronçon de conduite.

L'invention repose notamment sur les principes suivants :

- le facteur de la caractéristique intrinsèque, tel que le facteur de perte pour l'absorption, dépend à la fois du matériau, tel que le fluide, et de la fréquence à laquelle on mesure ce facteur.
- le facteur varie en général beaucoup avec la fréquence et présente un extrêmum qui est un maximum pour une fréquence donnée et qui dépend du matériau. Par suite, lorsque l'on veut analyser un fluide, qui comporte au moins deux liquides ayant un contraste dans leur facteur de caractéristique intrinsèque, on mesure la caractéristique telle l'absorption, pour au moins deux fréquences adaptées à permettre une discrimination des différents facteurs de la caractéristique à ces deux fréquences comme étant des fréquences pour lesquels l'un des facteur est négligeable devant l'autre.

Par exemple, dans un mélange comprenant de l'eau et de l'huile hydrocarbonée, la fréquence de mesure est choisie autour de 21 GHz, car pour l'absorption que l'on mesure, le facteur de perte de l'eau est de l'ordre de 30 à 40, alors que le facteur de perte de l'huile est de l'ordre de 10 $^{-6}$. Dans ce cas, le rapport des facteurs d'absorption est donc d'environ 3.10$^7$.

Par conséquent, la mesure de l'absorption à cette fréquence fournira la teneur en eau du fluide.

Grâce à la connaissance de la teneur en eau, il suffit ensuite de mesurer l'absorption du fluide à une autre fréquence et de déterminer la teneur en huile.

L'invention sera bien comprise et ses avantages apparaîtront clairement à la lecture de la description suivante illustrée par les figures annexées parmi lesquelles :

- La figure 1 schématise le principe de fonctionnement du dispositif de mesure selon l'invention.
- La figure 2 illustre un mode particulier du dispositif en coupe suivant le sens perpendiculaire à l'écoulement du fluide.

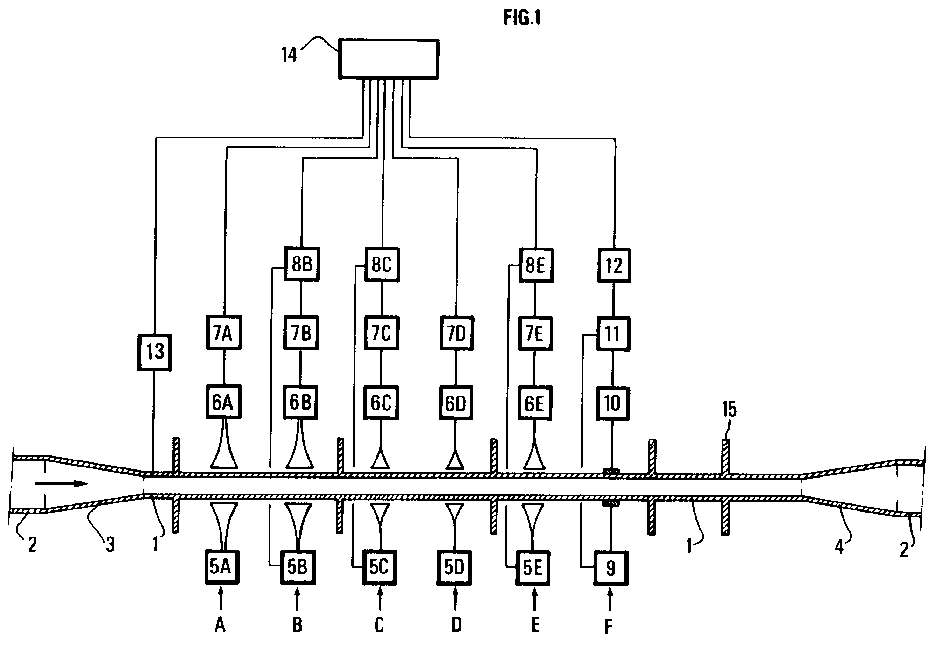

Le schéma de la figure 1 montre le principe de fonctionnement du dispositif de mesure des qualités d'un fluide en écoulement à travers une manchette renforcée 1 qui est raccordée en amont et en aval respectivement, d'une part à un diffuseur 2 de passage de la section circulaire à la section rectangulaire, ce diffuseur étant à section constante, et d'autre part un convergent amont rectangulaire 3 ou un divergent aval rectangulaire 4.

L'amont d'un point considéré est la zone qu'un élément de matière (du fluide) parcourt au cours d'un processus technique avant d'aboutir au point considéré, alors qu'au contraire l'aval est la zone qui est atteinte après le point considéré.

L'amont est sur la gauche de la figure et l'aval est sur la droite. La flèche dans le convergent 3 indique le sens de l'écoulement du fluide.

L'acquisition et le traitement des mesures peuvent être décomposés en plusieurs étapes correspondant à des chaînes de mesure distincts A, B, C, D, E, F. Les éléments d'une même chaîne de mesure sont référencés par la même lettre.

Les chaînes A à E sont des chaînes de mesure utilisant des micro-ondes et dont chacune comporte un émetteur 5 de micro-ondes chacun des émetteurs émettant à une fréquence donnée ou dans une gamme de fréquence fixée, un détecteur 6 de micro-ondes qui peut être un détecteur d'amplitude 6A, 6C, ou détecteur d'amplitude et de fréquence 6B, 6D, 6E des micro-ondes, un amplificateur 7 des signaux du détecteur 6.

Les chaînes B, C, E permettent de mesurer la vitesse des différents constituants du fluide par effet DOPPLER. Ces chaînes comportent en plus un comparateur analyseur 8 adapté à comparer la fréquence du signal amplifié à la fréquence du signal émis par l'émetteur 5 et éventuellemnt adapté à réaliser une analyse en fréquence, par exemple pour analyser en série de Fourrier, pour déterminer la vitesse de plusieurs fluides par décalages de la fréquence d'émission.

La chaîne A permet de déterminer la section d'eau dans la manchette 1 par analyse de l'absorption du flux de micro-ondes à la fréquence de 21 GHz.

La chaîne B permet de déterminer la vitesse de l' eau dans la manchette 1 par analyse du décalage de fréquence du flux de micro-ondes initialement à la fréquence de 21 GHz.

La fréquence de 21 GHz est choisie pour isoler le comportement de l'eau. La connaissance de la section d'eau et de la vitesse de l'eau permet de connaître le débit volumique de l'eau.

La chaîne C permet de déterminer une relation entre la vitesse de l'eau et la vitesse de l'huile par analyse des décalages en fréquence du flux de micro-ondes initialement à une fréquence sensiblement comprise entre 35 et 80 GHz bornes incluses. La connaissance de cette relation et de la vitesse de l'eau connue par la chaîne B permet de déterminer la vitesse de l'huile.

La chaîne D permet de déterminer la section de liquide (eau et huile confondue) dans la manchette 1 par analyse de l'absorption du flux de micro-ondes à une fréquence comprise entre 35 et 80 GHz bornes incluses. A partir des mesures de la chaîne A, on peut en déduire les quantités d'huile transportées dans l'effluent polyphasique.

La chaîne E permet, quand le gaz est bien séparé des liquides, de déterminer la vitesse du gaz par effet DOPPLER réalisé sur les particules véhiculées par le gaz. La mesure est effectuée sur la partie haute de l'écoulement dans laquelle se trouve préférentiellement le gaz.

Quand le gaz est dispersé au sein du liquide sous forme de bulles, la vitesse du gaz est assimilée à la vitesse des liquides à la composante verticale de la vitesse près, celle-ci étant généralement négligeable relativement à la composante horizontale de la vitesse.

La section de passage du gaz étant calculée par différence entre la section du passage du fluide dans la manchette et les sections de passage de l'eau ou de l'huile précédemment déterminées. Le débit volumique de gaz est calculé en effectuant le produit de la section de passage pour la vitesse moyenne du gaz.

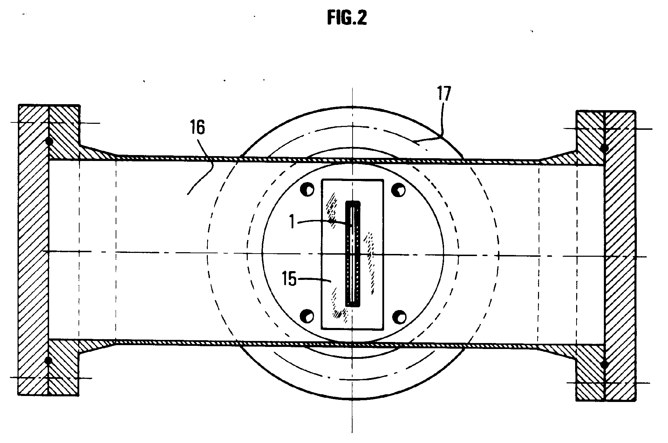

Lors de mesures, on dispose de préférence la manchette de telle sorte que son axe d'allongement soit horizontal et que la distance la plus grande de sa section droite soit verticale, ceci les le cas de la figure 2, le plan de la figure correspondant à un plan vertical.

La détermination du type d'écoulement à gaz séparé ou à bulles au sein du liquide, peut se faire en disposant d'une chaine E multiple comportant une série de capteurs à micro-ondes disposés sur une verticale le long de la paroi de la veine de mesure. Les capteurs seraient du type deuxième fréquence sensibles à la seule fréquence des liquides. La vitesse du gaz libre ne serait offerte qu'à la hauteur correspondant à son occupation dans la veine de mesure. Les informations seraient traitées par un programme de calcul sur ordinateur.

La chaîne de mesure F utilise les ultrasons pour mesurer la masse volumique du gaz du fluide qui se situe dans la partie haute de l'écoulement.

Un signal ultrasonore est émis par l'émetteur 9, traverse une première paroi de la manchette 1, le gaz, puis une deuxième paroi de la manchette 1 avant d'être détecté par un capteur 10 fournissant un signal électrique qui est amplifié par l'ampli 11. Le signal ultrasonore est émis sous forme d'impulsion et le comparateur 12 permet d'établir le temps nécessaire à la propagation de l'onde acoustique, ce temps dépendant de la masse volumique du gaz et de la température qui est fournie par le capteur thermique 13. Le débit massique de gaz peut alors être obtenu à partir du débit volumique précédemment calculé et de la masse volumique.

L'ensemble des différentes informations provenant des chaînes de mesure A à E et le capteur 13 est traité par un calculateur 14, de manière à fournir les valeurs instantanées ou cumulées des sections des différents composés du fluide à la vitesse de ces composés.

Les émetteurs 5B, 5C, 5E et les détecteurs 6B, 6C, 6E sont disposés respectivement les uns en face des autres, mais ont leur axe d'émission ou de réception inclinés de 45° par rapport à l'axe de l'écoulement, de manière à pouvoir déterminer la vitesse des différents constituants du fluide.

La connaissance de la masse volumique du gaz, de la température et de sa pression (faciles à obtenir), permet en outre par la méthode "PVT" utilisée dans les industries pétrolières et chimiques, de déterminer la masse volumique de l'huile et de l'eau et ainsi les débits massiques d'huile et d'eau d'un gisement pétrolier par exemple.

La figure 2 illustre un mode particulier du dispositif selon l'invention en coupe suivant le sens perpendiculaire à l'écoulement du fluide.

La manchette 1 apparaissant de forme rectangulaire oblongue est réalisée en matériau transparent aux micro-ondes, tel qu'un matériau composite résine-verre, et résistant aux différences de pression entre l'intérieur et l'extérieur du tube. Cette manchette 1 est renforcée par des nervures 15 disposées tout autour d'elle à intervale régulier. La forme rectangulaire de la manchette 1 a été élaborée de manière à permettre une séparation naturelle du gaz et des liquides et à permettre une mesure correcte des sections de passage des différents liquides, car lorsque l'on mesure l'absorption, celle-ci dépend exponentiellement et non linéairement de l'épaisseur de matériau traversé par le flux électromagnétique de micro-ondes (loi de Beer-Lambert).

Les différents émetteurs et détecteurs sont disposés le long de la manchette entre les nervures et les autres éléments (amplificateurs, analyseurs, comparateurs) sont disposés dans un caisson 16 étanche, de manière à permettre une immersion sous-marine. Ce caisson permet en outre de contenir les effluents en cas de détérioration de la manchette de mesure transparente aux micro-ondes. La manchette 1 comporte deux brides 17 permettant une implantation facile sur une conduite.

En production sous-marine pétrolière, le caisson 16 est relié à un module électro-hydraulique et électronique de commande qui assure l'interface avec le calculateur mentionné ci-dessus qui se trouve à la surface de la mer.

Le calculateur pourrait aussi être intégré dans l'enceinte immergée. Les signaux produits par le calculateur sont multiplexés pour être envoyés jusqu'à la surface.

La manchette de mesure peut être placée à proximité d'un puits de production sous-marine, de manière à connaître la composition de ses effluents à la sortie du puits, ainsi que les débits des effluents dans les conditions de pression et de température du lieu.

On indique ci-après un exemple non limitatif d'application du procédé selon l'invention.

L'absorption comme la transmission d'une onde électromagnétique, comme l'est une micro-onde, à travers un échantillon, est régie par la loi de Beer Lambert

$$I = Io \cdot \exp(-Ka.h) \text{ ou } A = \log \frac{I}{Io} \frac{Ka\,h}{2,303}$$

avec

I = intensité du flux d'ondes sortant de l'échantillon,

Io = intensité du flux d'ondes entrant dans l'échantillon,

Ka = coefficient d'absorption molaire de la matière de l'échantillon,

h = épaisseur de l'échantillon,

A = absorption.

Ka est une propriété de la matière de l'échantillon, il peut être déterminé à partir de la permittivité $\varepsilon''$ dans le plan complexe. $\varepsilon''$ est aussi appelé facteur de

perte.

$$Ka = \frac{4.\pi.f.V.k}{c.[C]} \text{ avec } k = \frac{2n}{\varepsilon''}$$

avec

f = fréquence de mesure,

k = coefficient d'extinction,

n = indice de refraction de la matière de l'échantillon,

V = fraction volumique de la matière de l'échantillon,

c = vitesse des ondes électromagnétiques dans le vide,

[C] = concentration molaire de matière dans l'échantillon.

$\varepsilon''$ varie en fonction de la fréquence et est mesurable. Les variations et l'amplitude de $\varepsilon''$ dépendent du type de matière.

Lorsque l'on mesure l'absorption totale $A_T$ à travers les parois (P) d'une manchette de mesure, telle que décrite précédemment, à l'intérieur de laquelle se trouve un fluide comprenant de l'eau (W), de l'huile (H), du gaz (G), on mesure la somme des absorptions des constituants soit :

$$A_T = A_P + A_W + A_H + A_G$$

Si l'on effectue la mesure de l'absorption totale $A_{T1}$ à une fréquence (indice 1) voisine de 21 GHz (fréquence de relaxation de l'eau), l'absorption de l'eau sera trés grande relativement à celles de l'huile et du gaz, le facteur de perte respectivement de l'eau et de l'huile étant $\varepsilon''_{W1} = 40$ $\varepsilon''_{H1} = 2 \times 10^{-6}$.

On aura l'absorption totale

$$A_{T1} = A_{P1} + A_{W1}$$

Si l'on effectue une mesure de l'absorption totale $A_{T2}$ à une autre fréquence indice 2 pour laquelle le contraste d'absorption entre l'eau et l'huile est faible, par exemple à la fréquence $f_2 = 80$ GHz,

($\varepsilon''_{W2} = 4$ et $\varepsilon''_{H2} = 2$), on aura toujours l'absorption du gaz $A_{G2}$ négligeable et donc $A_{T2} = A_{P2} + A_{W2} + A_{H2}$.

L'absorption $A_{P1}$ des parois de la manchette à la fréquence 1 ayant été mesurée préalablement, de la mesure de $A_{T1}$ on détermine $A_{W1}$ et ainsi comme $Ka_{W1}$ ou $\varepsilon''_{W1}$ est connu, on connait la quantité d'eau ou l'épaisseur d'eau $h_W$ par la relation

$$A_{W1} = \frac{-Ka_{W1}.h_w}{2,303}$$

Connaissant alors la quantité d'eau, et disposant de la table de mesure du coefficient d'absorption Ka de l'eau ou du facteur de perte $\varepsilon''$ de l'eau en fonction de la fréquence, on détermine l'absorption de l'eau $A_{W2}$ à la fréquence 2.

Dès lors connaissant les termes $A_{T2}$, $A_{P2}$, $A_{W2}$, on détermine $A_{H2}$ par la formule :

$$A_{H2} = A_{T2} - A_{P2} - A_{W2}$$

et ainsi puisque $Ka_{H2}$ ou $\varepsilon''_{H2}$ est connu on a la quantité d'huile ou l'épaisseur d'huile $h_H$

$$h_H = \frac{-2,303.A_{H2}}{Ka_{H2}}$$

dans la section de mesure.

La quantité de gaz dans la section de mesure est celle qui n'est pas occupée par l'eau et l'huile $h_G = h_T - (h_H + h_W)$, $h_T$ étant l'épaisseur de la section de mesure.

Par suite les proportions en eau, huile et gaz sont définies respectivement comme suit :

$$\frac{h_W}{h_T}, \frac{h_H}{h_T}, \frac{h_G}{h_T}.$$

## Revendications

1. Procédé pour mesurer des qualités d'un fluide polyphasique constitué d'au moins un premier liquide et d'au moins un second liquide constitué d'une phase différente de celle du premier liquide, chaque liquide ayant au moins un facteur d'une caractéristique intrinsèque relative aux micro-ondes pour une fréquence donnée, caractérisé en ce qu'il comporte les étapes suivantes :

   a) on émet un premier faisceau de micro-ondes à une première fréquence fixe f1 à travers ledit fluide, ladite première fréquence f1 étant une fréquence pour laquelle la valeur de la caractéristique intrinsèque du premier liquide est grande par rapport à la valeur de la caractéristique intrinsèque du second liquide,

   b) on détermine la valeur de ladite caractéristique intrinsèque que possède le premier faisceau de micro-ondes après avoir traversé ledit fluide,

   c) on émet un second faisceau de micro-ondes à une second fréquence fixe f2 à travers ledit fluide, ladite seconde fréquence étant une fréquence pour laquelle la valeur de la caractéristique intrinsèque du second liquide est non négligeable devant la valeur de la caractéristique intrinsèque du premier,

   d) on détermine la valeur de la caractéristique intrinsèque que possède le second faisceau de micro-ondes après avoir traversé ledit fluide,

   e) on détermine la quantité du premier liquide et la quantité du second liquide à partir de la valeur de ladite caractéristique intrinsèque du premier faisceau et la valeur de ladite caractéristique intrinsèque du second faisceau, lesdites quantités permettant de déterminer les qualités dudit fluide.

2. Procédé selon la revendication 1, caractérisé en ce que l'on mesure comme caractéristique intrinsèque aux étapes b) et/ou d) l'absorption des micro-ondes.

3. Procédé selon la revendication 1, caractérisé en ce que ledit fluide comporte du gaz.

4. Procédé selon la revendication 1, caractérisé en ce que la valeur de la première fréquence est choisie en fonction de la phase aqueuse et sensiblement égale à 21 GHz et la seconde fréquence possède une valeur éloignée de 21 GHz.

5. Procédé selon l'une des revendications 1 à 4, caractérisé en ce que le fluide polyphasique étant en mouvement selon un sens on mesure la variation de fréquence d'un faisceau de micro-ondes ayant une fréquence initiale, ledit faisceau traversant ledit fluide polyphasique dans un sens non perpendiculaire au sens du mouvement du fluide polyphasique, ladite fréquence initiale étant une fréquence pour laquelle le facteur de la caractéristique intrinsèque du premier ou du deuxième liquide est négligeable devant le facteur de la caractéristique intrinsèque respectivement du deuxième ou du premier liquide, et on détermine la vitesse du liquide dont le facteur de la caractéristique intrinsèque est prépondérant.

6. Procédé selon l'une des revendications 1 à 4, caractérisé en ce que ledit fluide polyphasique étant en mouvement
   - on détermine l'évolution de l'amplitude dans le temps d'un faisceau de micro-ondes ayant au moins une fréquence initiale, et traversant ledit fluide dans un sens non perpendiculaire au sens du mouvement, ladite fréquence initiale étant une fréquence pour laquelle les facteurs de la caractéristique intrinsèque du premier et du deuxième fluide sont du même ordre de grandeur,
   - on analyse en fréquence l'évolution de ladite amplitude de manière à établir au moins une variation de fréquence, et
   - on détermine, à partir de la ou des variations de la fréquence initiale et de la composition dudit fluide, la vitesse du premier et du second liquide.

7. Procédé selon la revendication 6, caractérisé en ce que ledit fluide polyphasique comportant du gaz en mouvement, ledit gaz comportant des particules auquel est associé un facteur de la caractéristique intrinsèque relative aux micro-ondes :
   - on sépare au moins une partie du gaz des premier et second liquides,
   - on mesure la variation de fréquence d'un faisceau de micro-ondes ayant une fréquence initiale et traversant ladite partie de gaz séparée selon un sens non perpendiculaire au sens du mouvement du gaz, et
   - on détermine, à partir de la variation de fréquence, la vitesse dudit gaz.

8. Procédé selon l'une des revendications 1 à 7, caractérisé en ce que :
   - on envoie le fluide polyphasique dans un volume dont aux moins deux faces sont parallèles, et
   - on détecte ou on mesure la caractéristique du faisceau de micro-ondes ayant traversé au moins une partie desdites faces parallèles.

9. Dispositif pour mesurer les qualités d'un fluide polyphasique composé d'au moins un premier liquide et d'au moins un second liquide constitué d'une phase différente de celle du premier liquide, ledit fluide polyphasique étant en écoulement dans ledit dispositif, le premier et le second liquide ayant chacun au moins un facteur d'une caractéristique intrinsèque relative aux micro-ondes pour une fréquence donnée, ledit dispositif comportant :
   - un volume (1) retenant le fluide polyphasique comprenant deux fenêtres parallèles transparentes aux micro-ondes et une section de passage du fluide en écoulement connue,
   - des premiers moyens (5A) émetteurs de micro-ondes à une première fréquence f1 traversant l'une ou première desdites fenêtres, pour laquelle la valeur de la caractéristique intrinsèque du second liquide est négligeable par rapport à la valeur de la caractéristique intrinsèque du premier liquide,
   - des seconds moyens (6A) récepteurs des micro-ondes émis par les premiers moyens et atténués après avoir traversé le volume du fluide polyphasique,
   - des troisième moyens (14) permettant de déterminer la valeur de la caractéristique intrinsèque de l'énergie micro-ondes reçue par lesdits seconds moyens,
   - des quatrième moyens (5D) émetteurs de micro-ondes à une seconde fréquence f2 à travers le volume du fluide, la seconde fréquence étant une fréquence pour laquelle la valeur de la caractéristique intrinsèque du second liquide n'est pas négligeable devant la valeur de la caractéristique intrinsèque du premier liquide,
   - des cinquième moyens (6D) récepteurs des faisceaux de micro-ondes émis par les quatrième moyens et ayant traversé le volume de fluide polyphasique,
   - des sixième moyens (14) pour déterminer la valeur de la caractéristique intrinsèque des micro-ondes reçus par les cinquième moyens,
   - des septième moyens (14) permettant de déterminer à partir de la caractéristique intrinsèque reçue par les seconds moyens (6A) la quantité du premier liquide contenue dans le fluide polyphasique,
- des huitième moyens (14), permettant de déterminer à partir de la caractéristique intrinsèque reçue par lesdits sixième moyens (6D), la quantité de l'ensemble du premier et du second liquide contenus dans le fluide, et
- des neuvième moyens (14) déterminant à partir de la quantité du premier liquide et de la quantité de l'ensemble du premier et du second liquide la quantité du second liquide, lesdites quantités permettant de déterminer les qualités du fluide.

10. Dispositif selon la revendication 9, caractérisé en ce que lesdites fenêtres sont réalisées en un matériau composite transparent aux micro-ondes.

11. Dispositif selon la revendication 9, caractérisé en ce que le fluide polyphasique étant en écoulement dans une conduite, le volume est un tronçon de ladite conduite.

12. Application du procédé selon l'une des revendications 1 à 7 à la mesure de la caractéristique d'un faisceau du micro-ondes traversant au moins en partie un volume ayant au moins deux faces parallèles contenant un fluide polyphasique.

**Patentansprüche**

1. Verfahren zum Messen der Eigenschaften eines Mehrphasenfluids, das gebildet wird durch wenigstens eine erste Flüssigkeit und wenigstens eine zweite Flüssigkeit, die ihrerseits aus einer Phase unterschiedlich zu der der ersten Flüssigkeit gebildet ist, wobei jede Flüssigkeit wenigstens einen Faktor einer Intrinsik-Qualität relativ zu den Mikrowellen für eine gegebene Frequenz hat, dadurch gekennzeichnet, daß es die folgenden Stufen umfaßt:
    a) man schickt ein erstes Bündel von Mikrowellen bei einer ersten festen Frequenz f1 quer durch dieses Fluid, wobei diese erste Frequenz f1 eine Frequenz ist, für die der Wert der Intrinsik-Eigenschaft der ersten Flüssigkeit groß, bezogen auf den Wert der Intrinsik-Eigenschaft der zweiten Flüssigkeit, ist,
    b) man bestimmt den Wert der Intrinsik-Eigenschaft, die das erste Bündel von Mikrowellen, nachdem es dieses Fluid durchsetzt hat,
    c) man sendet ein zweites Bündel von Mikrowellen bei einer zweiten festen Frequenz f2 quer durch dieses Fluid aus, wobei diese zweite Frequenz eine Frequenz ist, für die der Wert der Intrinsik-Eigenschaft der zweiten Flüssigkeit nicht vernachlässigbar gegenüber dem Wert der Intrinsik-Eigenschaft der ersten ist,
    d) man bestimmt den Wert der Intrinsik-Eigenschaft, den das zweite Bündel von Mikrowellen, nachdem es dieses Fluid durchsetzt hat, und
    e) man bestimmt die Menge der ersten Flüssigkeit und die Menge der zweiten Flüssigkeit ausgehend von dem Wert dieser Intrinsik-Eigenschaft des ersten Bündels und des Wertes dieser Intrinsik-Eigenschaft des zweiten Bündels, wobei diese Mengen es ermöglichen, die Eigenschaften dieses Fluids zu bestimmen.

2. Verfahren nach Anspruch 1, dadurch gekennzeichnet, daß man als Intrinsik-Eigenschaft in den Stufen b) und/oder d) die Absorption der Mikrowellen mißt.

3. Verfahren nach Anspruch 1, dadurch gekennzeichnet, daß dieses Fluid Gas umfaßt.

4. Verfahren nach Anspruch 1, dadurch gekennzeichnet, daß der Wert der ersten Frequenz gewählt ist als Funktion der wäßrigen Phase und im wesentlichen gleich 21 GHz ist, und die zweite Frequenz einen Wert entfernt von 21 GHz besitzt.

5. Verfahren nach einem der Ansprüche 1 bis 4, dadurch gekennzeichnet, daß während der Bewegung des Mehrphasenfluids in einer Richtung man die Frequenzänderung eines Bündels von Mikrowellen, das eine Eingangsfrequenz hat, mißt, wobei dieses Bündel dieses Mehrphasenfluid in einer Richtung nicht-senkrecht zur Bewegungsrichtung des Mehrphasenfluids durchsetzt, die Eingangsfrequenz eine Frequenz ist, für die der Faktor der Intrinsik-Eigenschaft der ersten oder der zweiten Flüssigkeit vernachlässigbar gegenüber dem Faktor der Intrinsik-Eigenschaft jeweils der zweiten oder der ersten Flüssigkeit ist, und man die Geschwindigkeit der Flüssigkeit bestimmt, bei welcher der Faktor der Intrinsik-Eigenschaft vorherrschend ist.

6. Verfahren nach einem der Ansprüche 1 bis 4, dadurch gekennzeichnet, daß während der Bewegung dieses Mehrphasenfluids
    - man die Entwicklung der Amplitude über die Zeit eines Bündels von Mikrowellen bestimmt, das wenigstens eine Eingangsfrequenz hat und das dieses Fluid in einer Richtung nicht-senkrecht zur Bewegungsrichtung durchsetzt, wobei diese Eingangsfrequenz eine Frequenz ist, für die die Faktoren der Intrinsik-Eigenschaft des ersten und des zweiten Fluids von der gleichen Größenordnung sind,

- man führt eine Frequenzanalyse der Entwicklung dieser Amplitude derart durch, daß wenigstens eine Frequenzveränderung aufgestellt wird, und
- man bestimmt ausgehend von der oder den Veränderungen der Eingangsfrequenz und der Zusammensetzung dieses Fluids die Geschwindigkeit des ersten und des zweiten Fluids.

7. Verfahren nach Anspruch 6, dadurch gekennzeichnet, daß dann, wenn das das Gas in Bewegung umfassende Mehrphasenfluid, wobei das Gas Partikel umfaßt, denen ein Faktor der Intrinsik-Eigenschaft relativ zu den Mikrowellen zugeordnet ist:

- man wenigstens einen Teil des Gases der ersten und zweiten Flüssigkeiten trennt,
- die Frequenzänderung eines Bündels von einer Eingangsfrequenz aufweisenden Mikrowellen, die diesen Teil des abgetrennten Gases gemäß einer Richtung nicht-senkrecht zur Bewegungsrichtung des Gases durchsetzen mißt und
- ausgehend von der Frequenzänderung die Geschwindigkeit dieses Gases bestimmt.

8. Verfahren nach einem der Ansprüche 1 bis 7, dadurch gekennzeichnet, daß man das Mehrphasenfluid in ein Volumen leitet, von dem wenigstens zwei Flächen parallel sind, und
- man die Eigenschaft des Bündels von Mikrowellen, die wenigstens einen Teil dieser parallelen Flächen durchsetzt haben, mittelt oder mißt.

9. Vorrichtung zum Messen der Eigenschaften eines Mehrphasenfluids, das aus wenigstens einer ersten Flüssigkeit und wenigsten einer zweiten Flüssigkeit, bestehend aus einer Phase unterschiedlich zu der ersten Flüssigkeit zusammengesetzt ist , wobei dieses Mehrphasenfluid im Strömungsvorgang in dieser Vorrichtung sich befindet, wobei die erste und die zweite Flüssigkeit je wenigstens einen Faktor einer Intrinsik-Eigenschaft relativ zu den Mikrowellen für eine gegebene Frequenz haben, wobei die Vorrichtung umfaßt:
- ein das Mehrphasenfluid zurückhaltendes Volumen (1) zwei parallele für Mikrowellen durchlässige Fenster sowie einen bekannten Durchgangsquerschnitt des in der Strömung befindlichen Fluids umfassend,
- erste Sendemittel (5A) für Mikrowellen bei einer ersten Frequenz f1, die eines oder das erste dieser Fenster durchsetzen, für die der Wert der Intrinsik-Eigenschaft der zweiten Flüssigkeit vernachlässigbar bezogen auf den Wert der Intrinsik-Eigenschaft der ersten Flüssigkeit ist,
- zweite Empfängermittel (6A) für Mikrowellen, die durch die ersten Mittel ausgesandt und abgeschwächt wurden, nachdem sie das Volumen des Mehrphasenfluids durchsetzt haben,
- dritte Mittel (14), die es ermöglichen, den Wert der Intrinsik-Eigenschaft der empfangenen Mikrowellen-Energie durch diese zweiten Mittel zu bestimmen.
- vierte Mittel (5D), welche Mikrowellen bei einer zweiten Frequenz f2 durch das Fluidvolumen aussenden, wobei die zweite Frequenz bei eine Frequenz liegt, für die der Wert der Intrinsik-Eigenschaft der zweiten Flüssigkeit nicht vernachlässigbar gegenüber dem Wert der Intrinsik-Eigenschaft der ersten Flüssigkeit ist,
- fünfte Mittel (6D), welche Mikrowellenbündel empfangen, die durch die vierten Mittel ausgesandt wurden und die das Mehrphasenfluidvolumen durchsetzt haben,
- sechste Mittel (14), zur Bestimmung des Werts der Intrinsik-Eigenschaft der Mikrowellen, welche von den fünften Mitteln empfangen wurden,
- siebte Mittel (14), die es ermöglichen, ausgehend von der durch die zweiten Mittel (6A) empfangenen Intrinsik-Eigenschaft, die Menge der ersten in dem Mehrphasenfluid enthaltenen Flüssigkeit zu bestimmen,
- achte Mittel (14), die es ermöglichen, ausgehend von der durch die sechsten Mittel (6D) empfangenen Intrinsik-Eigenschaft die Menge der Gesamtheit der ersten und zweiten in diesem Fluid enthaltenen Flüssigkeit zu bestimmen und
- neunte Mittel (14), die aus der Menge der ersten Flüssigkeit und der Menge der Gesamtheit der ersten und zweiten Flüssigkeit die Menge der zweiten Flüssigkeit bestimmen, wobei diese Mengen die Eigenschaften des Fluids zu bestimmen gestatten.

10. Vorrichtung nach Anspruch 9, dadurch gekennzeichnet, daß diese Fenster aus einem für Mikrowellen transparenten Verbundmaterial hergestellt sind.

11. Vorrichtung nach Anspruch 9, dadurch gekennzeichnet, daß wenn das Mehrphasenfluid im Strömungsvorgang in einer Leitung sich befindet, das Volumen ein Abschnitt dieser Leitung ist.

12. Anwendung des Verfahrens an einem der Ansprüche 1 bis 7 auf die Messung der Eigenschaft eines Bündels von Mikrowellen, welches wenigstens zum Teil ein Volumen durchsetzt, das wenigstens zwei parallele Flächen hat und ein Mehrphasenfluid enthält.

**Claims**

1. Method for measuring the qualities of a multiphase fluid made up of at least a first liquid and at least a second liquid constituting a different phase from that of the first liquid, each liquid having at least one factor of a characteristic intrinsic to micro-waves at a given frequency, characterised in that it comprises the following steps:
   a) a first micro-wave beam is emitted through the fluid at a first fixed frequency f1, the said first frequency f1 being a frequency at which the value of the intrinsic characteristic of the first liquid is high compared with the value of the intrinsic characteristic of the second liquid,
   b) the value of the said characteristic intrinsic to the first micro-wave beam after it has passed through the fluid is determined,
   c) a second micro-wave beam is emitted through at a second fixed frequency f2, the said second frequency being a frequency at which the value of the intrinsic characteristic of the second liquid is not negligible compared with the value of the intrinsic characteristic of the first,
   d) the value of the characteristic intrinsic to the second micro-wave beam after it has passed through the fluid is determined,
   e) the quantity of the first liquid and the quantity of the second liquid is determined using the value of the said intrinsic characteristic of the first beam and the value of the intrinsic characteristic of the second beam, these quantities enabling the qualities of the fluid to be determined.

2. A method as claimed in claim 1, characterised in that at steps b) and/or d), the absorption of the micro-waves is measured as being the intrinsic characteristic.

3. A method as claimed in claim 1, characterised in that the fluid contains gas.

4. A method as claimed in claim 1, characterised in that the value of the first frequency is chosen as a function of the aqueous phase and is substantially equal to 21 GHz and the second frequency has a value remote from 21 GHz.

5. A method as claimed in one of claims 1 to 4, characterised in that since the multi-phase fluid is moving in one direction, the variation in frequency of a micro-wave beam having an initial frequency is measured, the said beam passing through the multi-phase fluid in a direction that is not perpendicular to the direction of movement of the multi-phase fluid, the said initial frequency being a frequency at which the factor of the intrinsic characteristic of the first or the second liquid is negligible compared with the factor of intrinsic characteristic of respectively the second or first liquid, and the speed of the liquid whose factor of intrinsic characteristic is the greater is calculated.

6. A method as claimed in one of claims 1 to 4, characterised in that since the multi-phase fluid is moving
   - the changes in amplitude of a micro-wave beam having at least an initial frequency and passing through the fluid in a direction that is not perpendicular to the direction of movement are measured over a period of time, the said initial frequency being a frequency at which the factors of the intrinsic characteristic of the first and the second fluid are of the same value,
   - changes in the amplitude are analyzed in relation to frequency so as to establish at least one variation in frequency, and
   - using the variation or variations from the initial frequency and the composition of the fluid, the speed of the first and second liquid is determined.

7. A method as claimed in claim 6, characterised in that since the multi-phase fluid contains moving gas and the gas contains particles to which a factor of the characteristic intrinsic to the micro-waves is assigned:
   - at least a part of the gas is separated from the first and second liquids,
   - the variation in frequency of a micro-wave beam having an initial frequency and passing through the part of the separated gas in a direction not perpendicular to the movement of the gas is measured, and
   - the speed of the gas is determined on the basis of the variation in frequency.

8. A method as claimed in one of claims 1 to 7, characterised in that:

- the multi-phase fluid is fed into a volume of which at least two of the faces are parallel, and
- the characteristic of the micro-wave beam that has passed through at least part of the parallel faces is detected or measured.

9. A device for measuring the qualities of a multi-phase fluid made up of at least a first liquid and at least a second liquid constituting a phase different from that of the first liquid, the said multi-phase fluid being in a state of flow inside the said device, the first and second liquid each having at least one factor of a characteristic intrinsic to micro-waves at a given frequency, the device comprising;
   - a volume (1) containing the multi-phase fluid having two parallel windows transparent to micro-waves and a passage section for the flow of fluid under known conditions,
   - first means 5A) for emitting micro-waves through the one or the first of the said windows at a first frequency f1 at which the value of the intrinsic characteristic of the second liquid is negligible in comparison with the value of the intrinsic characteristic of the first liquid,
   - second means (6A) for receiving micro-waves emitted by the first means and attenuated after having passed through the volume of multi-phase fluid,
   - third means (14) enabling the value of the intrinsic characteristic of the micro-wave energy received by the second means to be determined,
   - fourth means (5D) for emitting micro-waves through the volume of fluid at a second frequency f2, the second frequency being a frequency at which the value of the intrinsic characteristic of the second liquid is not negligible compared with the value of the intrinsic characteristic of the first liquid,
   - fifth means (6D) for receiving micro-wave beams emitted by the fourth means and having passed through the volume of multi-phase fluid,
   - sixth means (14) for determining the value of the intrinsic characteristic of the micro-waves received by the fifth means,
   - seventh means (14) for determining the quantity of the first liquid contained in the multi-phase fluid on the basis of the intrinsic characteristic received by the second means (6A),
   - eighth means (14) enabling the quantity of the first and second liquid contained in the fluid to be determined as a whole on the basis of the intrinsic characteristic received by the sixth means (6D),
   - ninth means (14) for determining the quantity of the second liquid using the quantity of the first liquid and the overall quantity of the first and second liquid together, these quantities making it possible to determine the qualities of the fluid.

10. A device as claimed in claim 9, characterised in that the said windows are made from a composite material that is transparent to micro-waves.

11. A device as claimed in claim 9, characterised in that since the multi-phase fluid is in a state of flow in a pipe, the volume is a portion of the said pipe.

12. Application of the method as claimed in one of claims 1 to 7 to the measurement of the characteristic of a micro-wave beam passing through at least a part of a volume having at least two parallel faces and containing a multi-phase fluid.

**FIG.1**

EP 0 399 876 B1

FIG.2